# EUROPEAN PATENT SPECIFICATION

(11) **EP 1 759 955 B1**
(45) Date of publication and mention of the grant of the patent: **08.11.2017**
(21) Application number: 06254583.5
(22) Date of filing: 04.09.2006
(51) Int. Cl.: B62D 1/16, B62D 1/20, B62D 7/22, F16D 3/06, F16C 3/03, F16C 29/02, F16C 33/20

(54) **Bush, particularly for vehicle steering column**
Gleitring, speziell für Fahrzeuglenksäule
Palier, en particulier pour une colonne de direction de véhicule

(30) Priority: 03.09.2005 GB 0517942
(43) Date of publication of application: 07.03.2007
(73) Proprietor: NSK Steering Systems Europe Limited, Maidenhead, Berkshire SL6 6TB (GB); NSK Ltd., Tokyo 141-8560 (JP)
(72) Inventor: Barton, Laurence George Herbert, Rowley's Green, Coventry, CV6 6PA (GB); Bentley, James Peter, Rowley's Green, Coventry, CV6 6PA (GB)
(74) Representative: Murgitroyd & Company

(56) References cited:
- EP-A1- 1 078 843
- EP-A1- 1 557 338
- DE-A1- 10 343 685
- JP-A- 2003 291 827
- US-A- 3 703 105
- US-A- 5 758 545

## Description

This invention relates to a bush, particularly for a vehicle steering column and to the steering column so produced.

A vehicle steering column assembly is shown in GB-A-2 341 914. Here, to inhibit vibration between two relatively sliding members of the steering column, a bush is mounted between the two members to facilitate relative sliding between the members. An inner column member is mounted in an outer column member and a bush is mounted with a sliding fit on the inner member inside the outer member, the bush being secured within the outer member.

In GB-A-2 341 914, the bush is secured by means of adhesive that has been injected through at least one fill hole provided in the outer steering column member, the adhesive curing so as to retain the bush securely. US 5,758,545 discloses a bush including the features according to the preamble of claim 1.

With the bush installed between two relatively sliding members of the steering column, there is no clearance between the interfaces of the parts and it may be possible that, under varying temperature conditions, and by expansion or contraction of the mating parts, pressure can be brought to bear on the surfaces of these parts, leading to increased or decreased sliding (or rotating) loads.

According to the present invention, there is provided a temperature compliant bush for insertion between two relatively slideable, inter-engaging inner and outer members, according to claim 1. Advantageous embodiments may include the features of dependent claims.

When the bush is mounted in place, removal of the bush from the inner member can be prevented by a stop provided in the region of a free end of the inner member that is located within the outer member.

The two members may have non-circular profiles such as substantially triangular, with the bush being correspondingly profiled.

The bush can be a plastics moulded part arranged to have a good sliding fit with light interference on the inner member.

The two members may be inner and outer steering column members, respectively, for a vehicle.

The invention also extends to a reach adjustable steering column assembly for a vehicle incorporating a bush that is essentially as defined above.

The steering column assembly may also be rake adjustable.

For a better understanding of the invention and to show how the same may be carried into effect, reference will now be made, by way of example, to the accompanying drawings, in which;-
Fig. 1 is a perspective view of part of a reach-adjustable steering column for a vehicle with inner and outer members and a bush interposed therebetween,
Fig. 2 is a sectional view through the inner and outer members with the bush interposed therebetween,
Fig. 3 is a perspective view of at least part of the bush shown in Figs. 1 and 2,
Fig, 4 is a perspective view of a bush of different profile, and
Fig. 5 is an end view of the bush shown in Fig. 4.

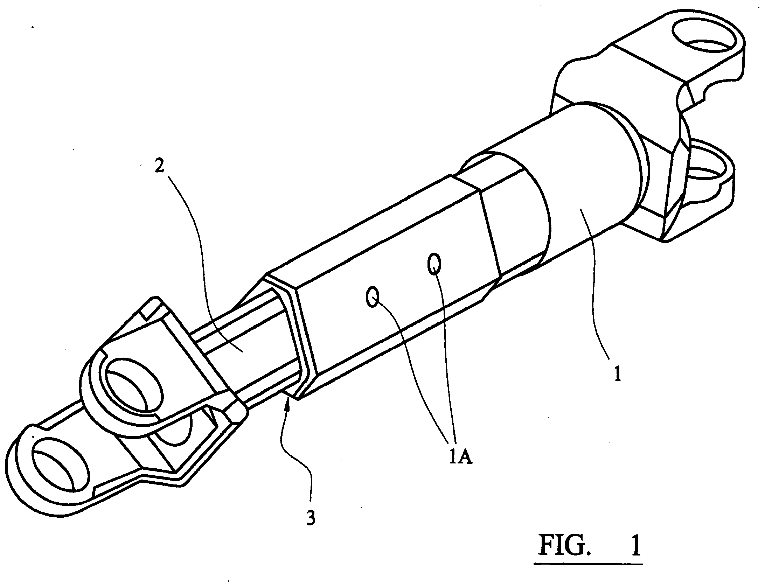

Referring to the drawings, Fig. 1 shows an outer steering column tube member 1 in which a slidable inner steering column shaft 2 is inserted. An inner peripheral surface and an outer peripheral surface of the respective outer steering column tube member 1 and inner steering column shaft 2 each comprises three substantially planar sides, which are joined to form, in section, substantially triangular shapes. A bush 3 is interposed between the steering column members 1 and 2 and may be secured within the assembly to the outer steering column member 1 by means of adhesive which is injected through holes 1A.

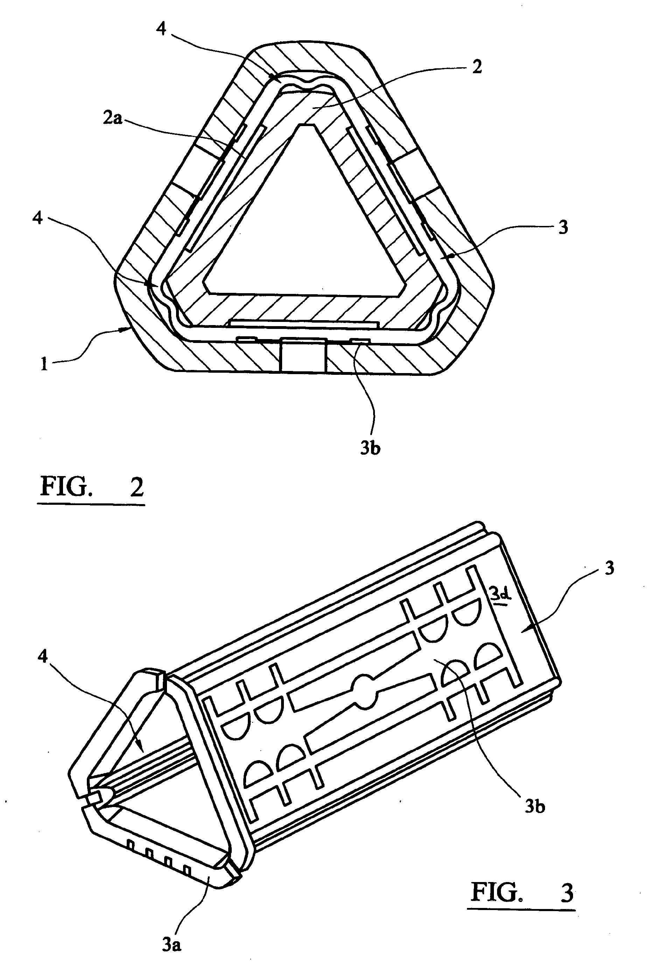

As shown in Figs. 2 and 3, at least one portion 4 of the bush 3 is arranged so as to accommodate expansion and/or contraction between the members 1 and 2 under a varying temperature load produced by and between one of those members and the other member and/or the bush, in order to accommodate the temperature differential so produced.

The or each portion 4 in the form illustrated is both of thinner sectional profile to the remainder of the bush 3 and is also provided with a corrugated profile, thereby enabling the bush to expand and contract, depending upon the load placed on it. The corrugated profile may be formed as a "W" profile. Between the three planar sides of the outer peripheral surface of the inner steering column shaft 2 and the three planar sides of the outer peripheral surface of the outer steering column tube member 1, substantially planar plate-portions or sides of the bush 3 are respectively interposed. The respective plate-portions of the bush 3 are each connected in the form shown to one of the corrugated profile portions 4.

As will be noted in Fig. 2, more than one portion 4 can be provided and, in the form illustrated, three such portions 4 are provided. Also, as shown in Fig. 2, the inner steering column shaft 2 is a hollow tube with a triangle shape in section.

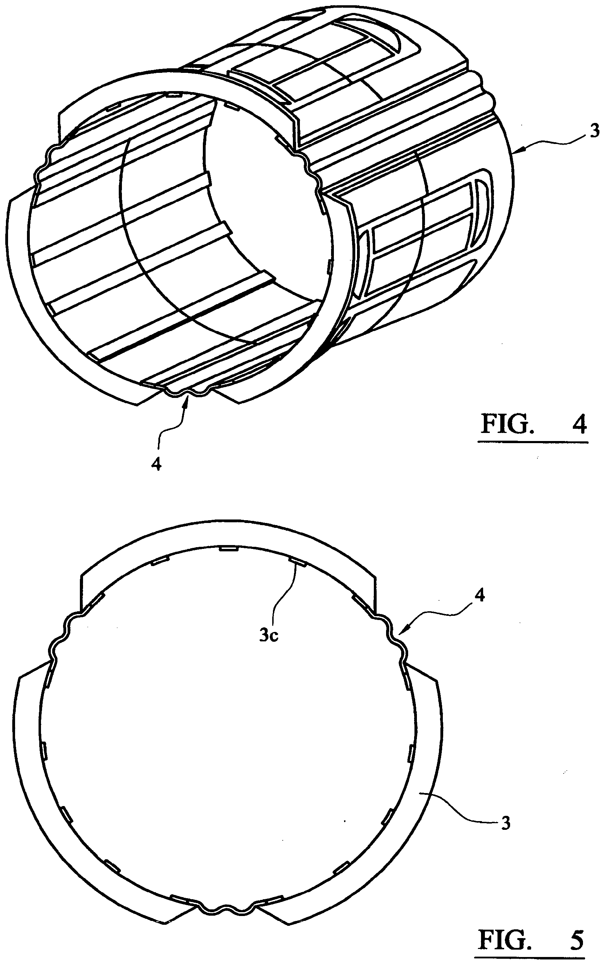

Figs. 2 and 3 show a set of members and bush of substantially triangular profile, whereas it will be appreciated from the substantially circular profiles of the bush shown in Figs. 4 and 5, the same principle can be applied between substantially cylindrical inter-engaging inner and outer members.

The sectional shape of the bush 3 is of closed form. That is, there are no slits, which extend in the axial direction formed on the bush 3.

An axial groove 2a is formed on the outer peripheral surface of the inner steering column shaft 2 so as to reduce friction between the bush 3 and the inner steering column shaft 2, which is generated during extension and contraction of the members (relative motion) in the axial direction. The axial groove can be formed on an inner peripheral surface of the outer steering column member 1. That is, at least one grove is formed on a sliding surface of either of the outer steering column tube member 1 and the inner steering column shaft 2, which slide-contacts with the bush 3. For the same purpose, grease or other form of lubrication may be applied to the outer peripheral surface of the inner steering column shaft 2 or the inner peripheral surface of the bush.

At one axial end of the bush 3, an extension portion 3a extending in a radial direction is provided on a part of the one end of the bush 3. When assembling the bush 3 to the outer steering column tube member 1, the extension portion 3a abuts on an end face of the outer steering column tube member 1.

On an outer peripheral surface of the bush 3, a number of grooves 3b may be formed as shown in Figs. 3 and 4. In this embodiment, after assembling the bush 3 to the outer steering column tube member 1, adhesive is introduced from holes 1A to the grooves 3b so as to fix the bush 3 to the outer steering column tube member 1. That is, the bush is bonded to the outer steering column tube member 1.

In the triangular form shown in Figs. 2 and 3, the bush 3 comprises three substantially planar sides, as described with grooves 3b. However, to improve the rigidity at the axial end of the bush, adjacent end portions 3d are flat-faced areas around the periphery of the bush. Thus, the portion of each substantially planar side with the grooves 3b is remote from the end portions, each flat face 3d lying in between. A similar, smooth surface 3d can be seen in Figure 4. Such flat or smooth surfaces 3d can be provided at both ends of the bush.

Further, as shown in Fig. 4, three corrugated portions 4 are provided around the circumference of the bush 3. However, the present invention is not limited to three. It is acceptable to form at least one of, for example four, corrugated portions 4 on the bush 3.

Furthermore, protrusions 3c, which are radially projecting and formed in the axial direction, are formed on an inner peripheral surface of the bush 3. The protrusions can be formed along with the circumferential direction with constant intervals.

It will be appreciated that the or each profile 4 can differ with the required application whilst allowing expansion and contraction of the mating members, with greatly reduced effect upon the slide moving/sliding loads of the two members. In other words, the bush 3 can be seen to be temperature compliant.

For an example, in Figs. 1 to 3, the sectional shapes of the bushes 3, 4 are substantially triangular, however, the sectional shapes may be substantially quadrangular.

Further, in the aforementioned embodiments, the outer shaft steering column tube member 1 and bush 3 are fixed to each other and the inner steering column shaft 2 is movable relative to a unit of the outer shaft steering column tube member 1 and bush 3. However, the embodiments may be modified so that the inner steering column shaft 2 and the bush 3 are fixed to each other and the outer steering column tube member 1 is movable relative to a unit of the inner column shaft 2 and the bush 3.

## Claims

1. A temperature compliant bush (3) for insertion between two relatively slideable, inter-engaging inner and outer members (1, 2),
the bush (3) having, around the circumference of the bush (3), at least one portion (4) which is of thinner cross-section than the remainder of the bush (3) and which is arranged so as to accommodate expansion and/or contraction between the members (1, 2) under a varying temperature load produced by and between one of the members (1, 2) and the other member (1, 2) and/or the bush (3), in order to accommodate the temperature differential so produced,
**characterised by**
the sectional shape of the bush (3) being of closed form, and the or each portion (4) having a corrugated profile constituting means to reduce loading differential between the inner and outer members (1, 2) at different temperatures.

2. A bush (3) according to claim 1 and comprising more than one said portion (4) provided around the bush (3).

3. A bush (3) according to any one of the preceding claims, wherein the bush (3) comprises at least three substantially planar sides, and adjacent end portions (3d) of the planar sides each having flat faces around the periphery of the bush (3).

4. A bush (3) according to claim 3, wherein a portion of each substantially planar side is provided with grooves (3b) remote from the adjacent end portions (3d), with the flat faces located in between.

5. A bush (3) according to any one of the preceding claims, wherein the corrugated profile is a "W" profile.

6. An assembly comprising two relatively moveable inter-engaging inner and outer members (1, 2) and a bush (3) according to any one of the preceding claims, the bush (3) being mounted between the two relatively moveable inter-engaging inner and outer members (1,2).

7. An assembly according to claim 6, with the bush (3) being a plastics moulded part arranged to have a good sliding fit with light interference on the inner member (2).

8. An assembly according to claim 6 or 7, wherein the bush (3) is bonded to the outer member (1) or to the inner member (2).

9. An assembly according to any one of claims 6 to 8, wherein at least one groove (2a) is formed on a sliding surface, which slide-contacts with the bush (3), of either of the outer (1) and inner (2) members.

10. An assembly according to any one of claims 6 to 9, wherein removal of the bush (3) from the inner member (2) is prevented by a stop provided in the region of a free end of the inner member (2) that is located within the outer member (1).

11. An assembly according to any one of claims 6 to 10, wherein the two members (1, 2) have substantially non-circular profiles with the bush (3) being correspondingly profiled.

12. An assembly according to any one of claims 6 to 10, wherein the two members (1, 2) have a substantially triangular profile in section, with the bush (3) being correspondingly profiled.

13. An assembly according to any one of claims 6 to 12, wherein the two members (1, 2) are inner and outer steering column members for a vehicle.

14. An assembly according to any one of claims 6 to 13, wherein the bush (3) is secured to the outer member (1) within the assembly.

15. A steering column assembly for a vehicle incorporating an assembly according to any one of claims 6 to 14.

16. A steering column assembly according to claim 15 and being a reach adjustable steering column.

17. A steering column assembly according to claim 15 or 16 and being a rake adjustable steering column.

## Patentansprüche

1. Eine temperaturkonforme Buchse (3) zum Einsetzen zwischen zwei relativ gleitfähigen, ineinandergreifenden inneren und äußeren Elementen (1, 2),
wobei die Buchse (3) um den Umfang der Buchse (3) mindestens einen Abschnitt (4) aufweist, der ein dünneres Querprofil aufweist als der Rest der Buchse (3) und der angeordnet ist, um eine Ausdehnung und/oder Kontraktion zwischen den Elementen (1, 2) unter einer variierenden Temperaturbelastung, welche von und zwischen einem der Elemente (1, 2) und dem anderen Element (1, 2) und/oder der Buchse (3) produziert wird, auszugleichen, um die so produzierte Temperaturdifferenz auszugleichen, **dadurch gekennzeichnet, dass**
die Querschnittsgestalt der Buchse (3) eine geschlossene Form ist und der oder jeder Abschnitt (4) ein gewelltes Profil aufweist, das ein Mittel bildet, um die Lastdifferenz zwischen dem inneren und äußeren Element (1, 2) bei unterschiedlichen Temperaturen zu reduzieren.

2. Buchse (3) gemäß Anspruch 1, die mehr als einen besagten Abschnitt (4) um die Buchse (3) herum bereitgestellt beinhaltet.

3. Buchse (3) gemäß einem der vorhergehenden Ansprüche, wobei die Buchse (3) mindestens drei im Wesentlichen planare Seiten aufweist und benachbarte Endabschnitte (3d) der planaren Seiten jeweils flache Flächen um die Peripherie der Buchse (3) aufweisen.

4. Buchse (3) gemäß Anspruch 3, wobei ein Abschnitt jeder im Wesentlichen planaren Seite fern von den benachbarten Endabschnitten (3d) mit Rillen (3b) versehen ist, wobei sich die flachen Flächen dazwischen befinden.

5. Buchse (3) gemäß einem der vorhergehenden Ansprüche, wobei das gewellte Profil ein "W"-Profil ist.

6. Eine Anordnung, die zwei relativ bewegliche, ineinandergreifende innere und äußere Elemente (1, 2) und eine Buchse (3) gemäß einem der vorhergehenden Ansprüche beinhaltet, wobei die Buchse (3) zwischen den zwei relativ beweglichen, ineinandergreifenden inneren und äußeren Elementen (1, 2) montiert ist.

7. Anordnung gemäß Anspruch 6, wobei die Buchse (3) ein Kunststoffformteil ist, das angeordnet ist, um einen guten Gleitsitz mit leichtem Übermaß auf dem inneren Element (2) aufzuweisen.

8. Anordnung gemäß Anspruch 6 oder 7, wobei die Buchse (3) an das äußere Element (1) oder an das innere Element (2) gebunden ist.

9. Anordnung gemäß einem der Ansprüche 6 bis 8, wobei mindestens eine Rille (2a) auf einer Gleitoberfläche von einem von dem äußeren (1) und inneren (2) Element, welche mit der Buchse (3) im Gleitkontakt ist, gebildet ist.

10. Anordnung gemäß einem der Ansprüche 6 bis 9, wobei die Entfernung der Buchse (3) von dem inneren Element (2) durch einen Anschlag verhindert wird, der in dem Bereich eines freien Endes des inneren Elements (2), welches sich innerhalb des äußeren Elements (1) befindet, bereitgestellt ist.

11. Anordnung gemäß einem der Ansprüche 6 bis 10, wobei die zwei Elemente (1, 2) im Wesentlichen nicht kreisförmige Profile aufweisen, wobei die Buchse (3) entsprechend profiliert ist.

12. Anordnung gemäß einem der Ansprüche 6 bis 10, wobei die zwei Elemente (1, 2) ein im Querschnitt im Wesentlichen dreieckiges Profil aufweisen, wobei die Buchse (3) entsprechend profiliert ist.

13. Anordnung gemäß einem der Ansprüche 6 bis 12, wobei die zwei Elemente (1, 2) ein inneres und ein äußeres Lenksäulenelement für ein Fahrzeug sind.

14. Anordnung gemäß einem der Ansprüche 6 bis 13, wobei die Buchse (3) innerhalb der Anordnung an dem äußeren Element (1) gesichert ist.

15. Eine Lenksäulenanordnung für ein Fahrzeug, die eine Anordnung gemäß einem der Ansprüche 6 bis 14 einschließt.

16. Lenksäulenanordnung gemäß Anspruch 15, die eine reichweiteneinstellbare Lenksäule ist.

17. Lenksäulenanordnung gemäß Anspruch 15 oder 16, die eine neigungseinstellbare Lenksäule ist.

## Revendications

1. Une douille se conformant à la température (3) pour insertion entre deux éléments interne et externe (1, 2) se mettant réciproquement en prise, à même de glisser de façon relative,
la douille (3) présentant, autour de la circonférence de la douille (3), au moins une portion (4) qui est de coupe transversale plus fine que le reste de la douille (3) et qui est agencée de manière à s'adapter à une expansion et/ou contraction entre les éléments (1, 2) sous une charge de température variable produite par et entre l'un des éléments (1, 2) et l'autre élément (1, 2) et/ou la douille (3), afin de s'adapter au différentiel de température ainsi produit,
**caractérisée par**
**le fait que** la configuration en coupe de la douille (3) est de forme fermée, et que la ou chaque portion (4) présente un profil ondulé constituant un moyen afin de réduire le différentiel de chargement entre les éléments interne et externe (1, 2) à différentes températures.

2. Une douille (3) selon la revendication 1 et comprenant plus de une dite portion (4) prévue autour de la douille (3).

3. Une douille (3) selon l'une quelconque des revendications précédentes, la douille (3) comprenant au moins trois côtés substantiellement plans, et des portions d'extrémité adjacentes (3d) des côtés plans présentant chacune des faces plates autour de la périphérie de la douille (3).

4. Une douille (3) selon la revendication 3, dans laquelle une portion de chaque côté substantiellement plan est pourvue de rainures (3b) à distance des portions d'extrémité adjacentes (3d), les faces plates étant situées entre celles-ci.

5. Une douille (3) selon l'une quelconque des revendications précédentes, dans laquelle le profil ondulé est un profil en « W ».

6. Un ensemble comprenant deux éléments interne et externe (1, 2) se mettant réciproquement en prise à même de se déplacer de façon relative et une douille (3) selon l'une quelconque des revendications précédentes, la douille (3) étant montée entre les deux éléments interne et externe (1, 2) se mettant réciproquement en prise à même de se déplacer de façon relative.

7. Un ensemble selon la revendication 6, la douille (3) étant une pièce moulée en plastique agencée afin de présenter un bon ajustement glissant avec une légère interférence sur l'élément interne (2).

8. Un ensemble selon la revendication 6 ou la revendication 7, dans lequel la douille (3) est collée à l'élément externe (1) ou à l'élément interne (2).

9. Un ensemble selon l'une quelconque des revendications 6 à 8, dans lequel au moins une rainure (2a) est formée sur une surface de glissement, laquelle est en contact glissant avec la douille (3), de l'un ou l'autre des éléments externe (1) et interne (2).

10. Un ensemble selon l'une quelconque des revendications 6 à 9, dans lequel le retrait de la douille (3) de l'élément interne (2) est empêché par une butée prévue dans la région d'une extrémité libre de l'élément interne (2) qui est située au sein de l'élément externe (1).

11. Un ensemble selon l'une quelconque des revendications 6 à 10, dans lequel les deux éléments (1, 2) présentent des profils substantiellement non circulaires, la douille (3) étant profilée de manière correspondante.

12. Un ensemble selon l'une quelconque des revendications 6 à 10, dans lequel les deux éléments (1, 2) présentent un profil substantiellement triangulaire en coupe, la douille (3) étant profilée de manière correspondante.

13. Un ensemble selon l'une quelconque des revendications 6 à 12, dans lequel les deux éléments (1, 2) sont des éléments de colonne de direction interne et externe pour un véhicule.

14. Un ensemble selon l'une quelconque des revendications 6 à 13, dans lequel la douille (3) est assujettie à l'élément externe (1) au sein de l'ensemble.

15. Un ensemble de colonne de direction pour un véhicule incorporant un ensemble selon l'une quelconque des revendications 6 à 14.

16. Un ensemble de colonne de direction selon la revendication 15 et qui est une colonne de direction réglable en hauteur.

17. Un ensemble de colonne de direction selon la revendication 15 ou la revendication 16 et qui est une colonne de direction réglable en inclinaison.
